# EUROPÄISCHE PATENTSCHRIFT

(11) **EP 1 555 449 B1**
(45) Veröffentlichungstag und Bekanntmachung des Hinweises auf die Patenterteilung: **05.12.2012**
(21) Anmeldenummer: 05000789.7
(22) Anmeldetag: 17.01.2005
(51) Int. Cl.: F16D 9/06

(54) **Vorrichtung zur Übertragung eines Drehmomentes von einen Motor zu einem Kompressor**
Torque transmission device from a motor to a compressor
Dispositif de transmission de couple d'un moteur à un compresseur

(30) Priorität: 18.01.2004 DE 102004002668
(43) Veröffentlichungstag der Anmeldung: 20.07.2005
(73) Patentinhaber: Momentive Specialty Chemicals GmbH, 58642 Iserlohn-Letmathe (DE); plastech engineering GmbH, 58642 Iserlohn (DE)
(72) Erfinder: Brinkmann, Peter, Dr., 44229 Dortmund (DE); Bayerl, Frank, 58091 Hagen (DE); Schütte, Michael, 58642 Iserlohn (DE)

(56) Entgegenhaltungen:
- EP-A- 0 856 675
- DE-U1- 7 725 998
- US-A- 5 443 372
- US-A1- 2003 118 443
- US-B1- 6 332 842

## Beschreibung

Die Erfindung betrifft eine Vorrichtung zur Übertragung eines Drehmomentes von einem Motor zu einem Kompressor, insbesondere einem Kompressor für eine Klimaanlage, mit einer Nabe zur Verbindung mit der Kompressorwelle und einer drehbar auf dem Kompressorgehäuse gelagerten Riemenscheibe, wobei die Riemenscheibe und die Nabe über eine Einrichtung zur Schwingungsdämpfung und zur Überlastsicherung miteinander verbunden sind, wobei die Überlastsicherung derart ausgebildet ist, dass die Verbindung zwischen Riemenscheibe und Nabe bei Überschreiten eines vorgegebenen Drehmomentes unterbrochen wird.

Kompressoren für Klimaanlagen werden in der Regel über einen Multi-V-Riemen von der Kurbelwelle eines Verbrennungsmotors angetrieben. Bei Blockieren des Kompressors rutscht der Riemen durch und wird in der Regel zerstört. Dadurch werden auch die anderen im gleichen Riementrieb befindlichen Aggregate nicht mehr angetrieben. Im ungünstigsten Fall fällt die Lenkunterstützung aus.

Um diesem Umstand entgegen zu wirken muss mindestens eines der drehmomentübertragenden Elemente über eine Sollbruchfunktion verfügen die bei betriebsunüblichem Drehmoment die Verbindung zwischen Riemenscheibe und Kompressorwelle aufhebt. Die Riemenscheibe sorgt dann ohne Antrieb des Kompressors für einen weiterhin funktionalen Riementrieb.

Weiterhin beschreibt die US-B1-6,332,842 einen Mechanismus zur Limitierung des Drehmomentes eines Kompressors für eine Klimaanlage durch eine äußere und innere Nabe, die Schlitze bzw. Rippen aufweise. Die Schlitze und Rippen greifen allerdings axial ineinander. Das bewirkt aber, dass der Bruch der Verbindung nur unzureichend definiert werden kann, da der Drehmomentkorridor zu groß ist.

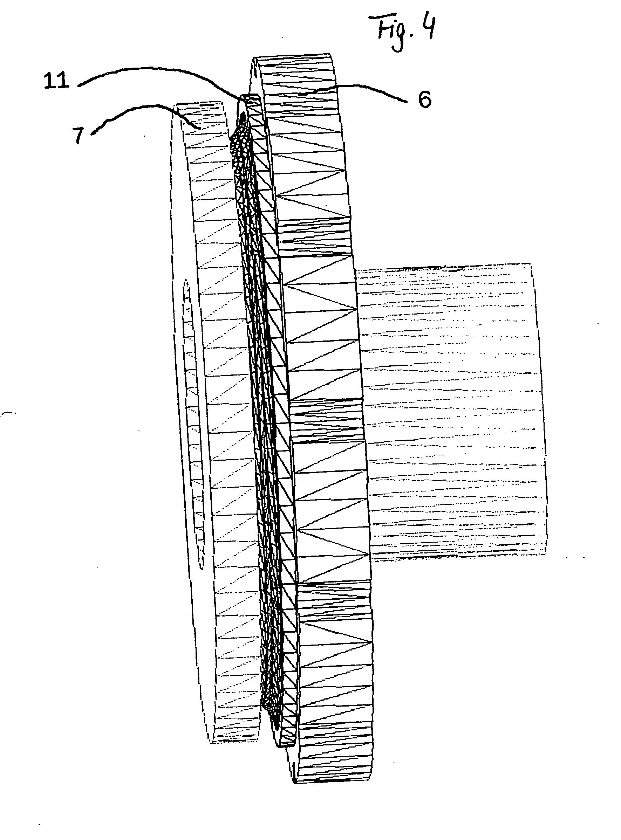

Die US-A-5,443,372 beschreibt einen Kupplungsmechanismus für einen Kompressor einer Klimaanlage, wobei die Konstruktion so ausgebildet ist, dass sie ebenfalls Sollbruchstellen aufweist. Die Figuren 4a bis 6b zeigen zapfenähnliche Gebilde (7,17,27), die sich radial außen befinden und in die Vorrichtung greifen.

Die DE-U1-7725998 offenbart die Möglichkeit der Ausbildung einer Überlastsicherung bei zu kuppelnden Bauteilen, die drehelastisch, stoß- und schwingungsdämpfend miteinander verbunden werden sollen. Vorgeschlagen wird ein elastisch verformbares Druckkissen auf dem nichtdehnbare Verbindungsteile angeordnet sind. Der äußere Kupplungsteil ist mit zahnartigen Vorsprüngen versehen, die in entsprechende Zahnlücken eines Ringes eingreifen.

Die DE 198 60 150 A1 beschreibt u. a. eine Vorrichtung bei der ein Mitnehmer aus Kunststoff fest mit einer Nabe verbunden ist. Nachteilig ist, dass die Sollbruchfunktion ausschließlich durch die Verbindung zwischen Kunststoff und Nabe gegeben ist und deshalb stark temperaturabhängig ist. Weiterhin hat auch der Alterungszustand des Kunststoffes einen Einfluss auf das Brechen der Sollbruchstelle, so dass in der Summe die Sollbruchfunktion einer großen Streuung unterliegt.

Aufgabe der Erfindung ist es deshalb, eine gattungsgemäße Vorrichtung so zu verbessern, dass die Sollbruchfunktion mit einer sehr kleinen Streuung arbeitet.

Diese Aufgabe wird bei einer Vorrichtung der eingangs bezeichneten Art erfindungsgemäß dadurch gelöst, dass die Einrichtung zur Überlastsicherung durch zwei Bauteile, nämlich einem Mitnehmer und einem Limiter-Ring gebildet wird, wobei der Limiter-Ring aus Metall, bevorzugt Sintermetall, ist und über zum Mittelpunkt hin radial gerichtete Zapfen verfügt und durch radialen Formschluss mit der Nabe das Drehmoment auf die Kompressorwelle überträgt und dass der Mitnehmer durch einen den Limiter-Ring ummantelnden Kunststoff gebildet ist und sich der Mitnehmer und der Limiter-Ring axial auf der Nabe verschieben lassen.

Bei der erfmdungsgemäßen Vorrichtung wird die Sollbruchfunktion allein durch den Limiter-Ring definiert, wobei Einflüsse hinsichtlich der Temperatur und Alterung keine Rolle spielen. Die Sollbruchfunktion kann so ausgebildet sein, dass sie drehrichtungsunabhängig bricht, wodurch sich die erfindungsgemäße Vorrichtung auch für Kompressoren mit unterschiedlicher Drehrichtung eignet. Sie kann aber auch für eine bevorzugte Richtung ausgelegt werden.
Dadurch dass der Mitnehmer, Limiter-Ring und die Nabe getrennte Bauteile sind, kann man sehr leicht durch Wechsel der Naben - Innengeometrien die gesamte Vorrichtung für unterschiedliche Kompressoren adaptieren.

Zapfen werden anmeldungsgemäß definiert als die den Innendurchmesser des Limiter-Rings überragenden Formhinterschneidungen verschiedener geometrischer Formen die zu einer radialen Übertragung des Drehmoments führen.

Durch die Verwendung von Kunststoff für den Mitnehmer, ist es möglich, ein Bauteil von geringem Gewicht bereitzustellen. Es ist möglich, dass der Mitnehmer als separate Kunststoffscheibe aufgebracht wird oder aber auch durch Ummantelung (Umspritzen) des Limiter-Ringes erzeugt wird.

Besonders bevorzugt ist, wenn der Kunststoff Phenol-Formaldehydharz ist. Da aufgrund der Eigenschaften von Phenol-Formaldehydharzen in der Regel auch die Riemenscheiben daraus gefertigt sind, wird eine besonders gute Passgenauigkeit über den gesamten Temperaturbereich der Konstruktion erreicht, da keine unterschiedlichen Ausdehnungen der Bauteile stattfinden.

Weiterhin ist von Vorteil, wenn der Limiter-Ring außenrandseitig eine Profilierung aufweist, um einen ausreichenden Formschluss zum ummantelnden Kunststoff zu gewährleisten.

Weiterhin wird die Aufgabe gelöst, durch eine Vorrichtung bei der die Einrichtung zur Überlastsicherung durch ein Bauteil, nämlich einer Mitnehmerscheibe aus Metall gebildet ist, wobei die Mitnehmerscheibe über zum Mittelpunkt hin radial gerichtete Zapfen verfügt und durch radialen Formschluss mit der Nabe das Drehmoment auf die Kompressorwelle überträgt und sich die Mitnehmerscheibe axial auf der Nabe verschieben lässt.
Diese Variante hat einen Kostenvorteil, da nur ein Bauteil hergestellt und eingebaut werden muss. Es ist bei Mitnehmerscheiben auch erstrebenswert, Teile mit mehr Masse bzw. höherem Massenträgheitsmoment zu verwenden, da dieses zu Drehschwingungsreduzierungen des Kompressors führen kann. Mitnehmerscheiben aus Metall haben ein ca. 1 0-faches Massenträgheitsmoment im Vergleich zu einem baugleichen Teil aus Kunststoff.

Besonders vorteilhaft ist, wenn die Zapfen des Limiter-Rings bzw. der Mitnehmerscheibe an ihrem Übergang zum Limiter-Ring bzw. an ihrem Übergang zum ringförmigen Anteil eine Verjüngung aufweisen. Durch die Verjüngung wird dieser Bereich als eindeutig schwächste Stelle ausgelegt sodass ein eindeutiger Bruchkreis definiert wird.

Besonders bevorzugt ist, wenn die Nabe zur Aufnahme der Zapfen axial verlaufende Nuten aufweist. Die axial verlaufenden äußeren Nuten in der Nabe sind in ihrer Länge so ausgelegt, dass die Zapfen des Limiter-Rings in axialer Richtung auf der Nabe beweglich sind, um Fertigungstoleranzen des Kompressors und dadurch Positionsunterschiede der Kompressorwelle zum Gehäuse leicht kompensieren zu können.

Wiederum bevorzugt ist, wenn die Nabe stirnseitig eine Vertiefung aufweist die das Versenken von Befestigungselementen ermöglicht, wodurch die Baulänge der gesamten Vorrichtung deutlich reduziert werden kann.

Von Vorteil, insbesondere im Vergleich zu auf dem Markt befindlichen Mitnehmern, ist weiterhin, wenn die Einrichtung zur Überlastsicherung und die Nabe getrennte Bauteile sind. Dadurch ist es möglich, den maximalen Außendurchmesser der Nabe größer als den Bruchkreis des Limiter-Rings zu gestalten. Bei Abscheren der Zapfen des Limiter-Rings wird so sicher verhindert, dass sowohl die Mitnehmerscheibe als auch der Limiter-Ring von der Vorrichtung weggeschleudert wird- als auch sichergestellt wird dass ohne aufwendige Zusatzmaßnahmen das Wegschleudern des abgebrochenen Teils des Mitnehmers verhindert wird.

Bevorzugt ist, wenn zwischen Nabe und Limiter-Ring bzw. Mitnehmerscheibe ein Federelement angeordnet ist. Um einer eventuellen Geräuschbildung entgegen zu wirken kann zwischen der Nabe und dem Limiter-Ring ein federndes Element zur Bildung einer Vorspannung angeordnet werden.

Das Material aus dem die Nabe gefertigt sein kann ist bevorzugt Kunststoff aufgrund des damit verbundenen geringeren Gewichtes. Weiterhin ist es möglich, dass die Nabe aus Aluminium, aus Sintermetall oder aus Messing besteht.

Die Erfindung ist nachstehend anhand der Zeichnungen beispielsweise erläutert. Diese zeigen in:
Fig. 1: Einen Schnitt durch eine erfindungsgemäße Vorrichtung gemäß Linie A-A
Fig. 2: Einen Schnitt durch die erfindungsgemäße Vorrichtung 3-dimensional
Fig. 3: Eine Explosionszeichnung der erfindungsgemäßen Vorrichtung von vom
Fig. 4: Eine 3-dimensionale Darstellung der Anordnung eines Federelements
Fig. 5: Eine 3-dimensionale Darstellung eines 2-teiligen Mitnehmers mit Limiter-Ring von hinten
Fig. 6: Eine 3-dimensionale Darstellung eines einstückigen Mitnehmers von vom
Fig. 7: Eine 3-dimensionale Darstellung eines einstückigen Mitnehmers von hinten

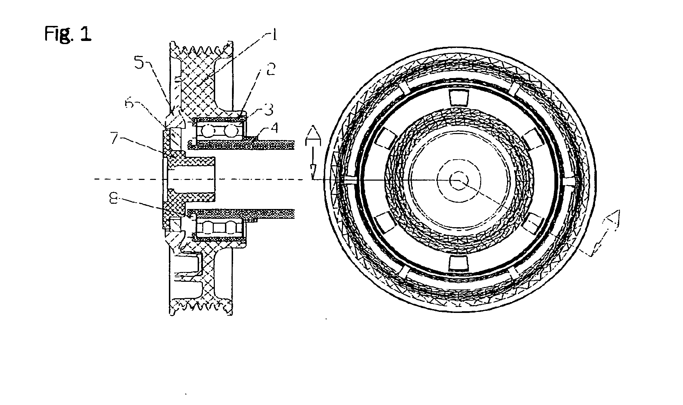

Die Figur 1 zeigt eine Riemenscheibe 1, die eine nicht dargestellte Welle eines Kompressors (Kompressorgehäuse 4, Lager 3, Stahlring 2) antreibt. Zwischen der Riemenscheibe 1 und der Nabe 7 befindet sich die Einrichtung zur Schwingungsdämpfung und Überlastsicherung mit den dargestellten Bauteilen Mitnehmer 5 und Limiter-Ring 6.

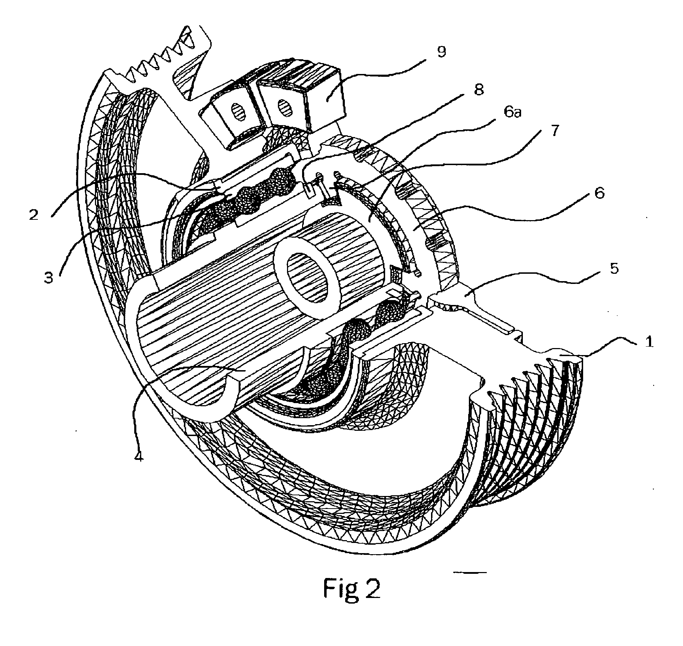

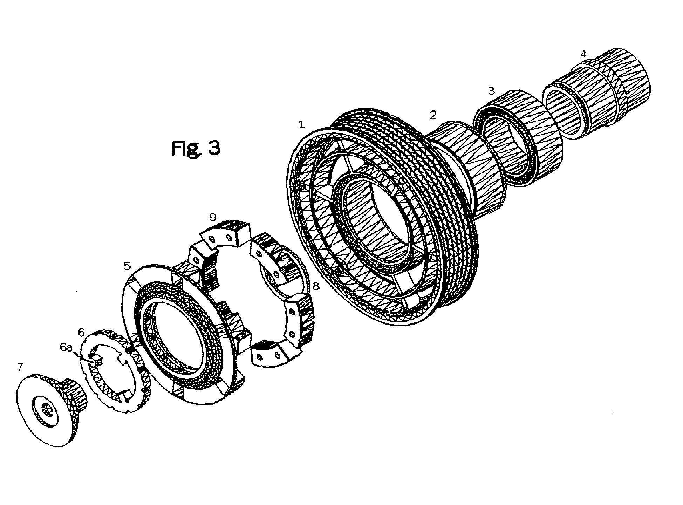

Aus den Figuren 2 und 3 geht weiterhin hervor, dass der Limiter-Ring 6 zum Mittelpunkt hin radial angeordnete Zapfen 6a aufweist die in axial verlaufende Nuten der Nabe 7 eingreifen. Die axial verlaufenden äußeren Nuten in der Nabe 7 sind in ihrer Länge so ausgelegt, dass die Zapfen 6a des Limiter-Rings 6 in axialer Richtung auf der Nabe 7 beweglich sind. Außenrandseitig wird der Limiter-Ring 6 von dem Mitnehmer 5 umgeben der durch eine radial segmentierte Profilierung in axialer Richtung in die Riemenscheibe 1 hineinragt. Die Riemenscheibe 1 weist durch Rippen eine ebensolche Anzahl an Vertiefungen auf wie der Mitnehmer 5 erhöhte Segmente enthält. Zwischen der Riemenscheibe 1 und dem Mitnehmer 5 ist die Einrichtung der Schwingungsdämpfung mit deren elastischen Elementen 9 angeordnet die zwischen der Riemenscheibe 1 und der nicht dargestellten Kompressorwelle eine Drehschwingungsdämpfung gewährleisten.

Die Figur 4 zeigt die Anordnung eines federnden Elementes 11 zwischen Limiter-Ring 6 und Nabe 7.

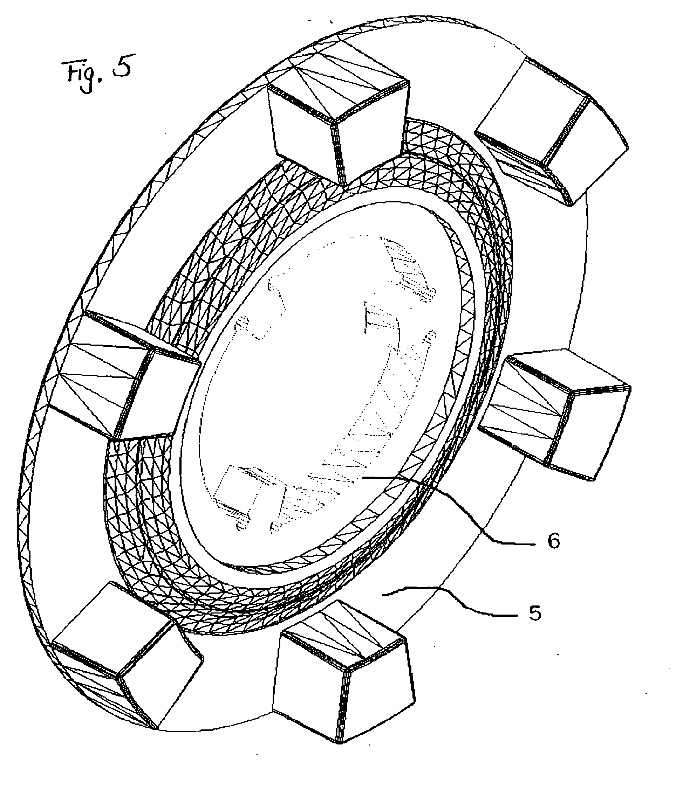

In der Figur 5 sind nochmals der Mitnehmer 5 und der Limiter-Ring 6 als getrennte Bauteile dargestellt. Der Limiter-Ring 6 wurde zur Bildung des Mitnehmers 5 mit Phenol-Formaldehydharz ummantelt dargestellt.

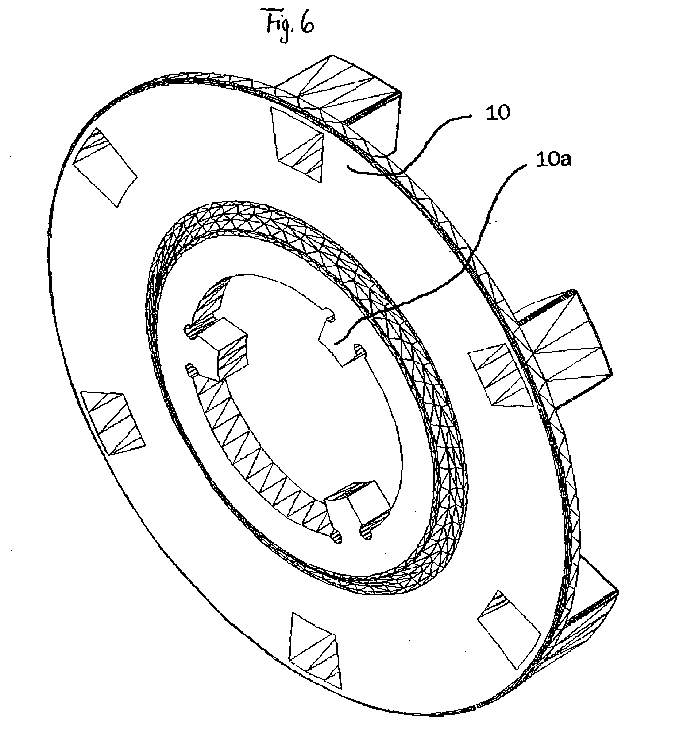

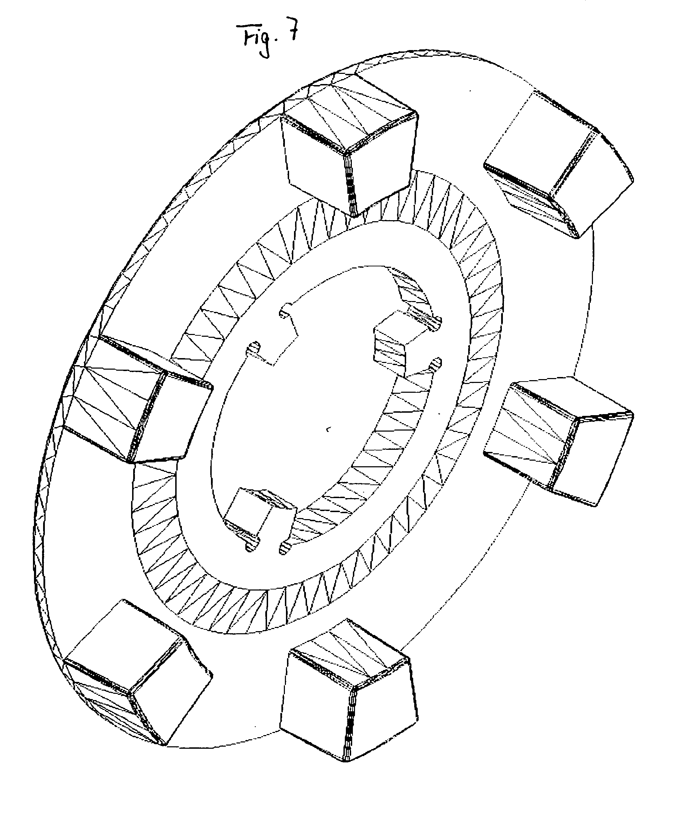

Die Figuren 6 und 7 zeigen das Bauteil zur Überlastsicherung in Form einer einstückigen Mitnehmerscheibe 10, wobei die Mitnehmerscheibe 10 zum Mittelpunkt hin radial angeordnete Zapfen 10a aufweist die in axial verlaufende Nuten der Nabe 7 eingreifen.

## Patentansprüche

1. Kompressor mit Vorrichtung zur Übertragung eines Drehmomentes, mit einer Nabe (7) zur Verbindung mit der Kompressorwelle und einer drehbar auf dem Kompressorgehäuse (4) gelagerten Riemenscheibe (1), wobei die Riemenscheibe (1) und die Nabe (7) über eine Einrichtung zur Schwingungsdämpfung (9) und zur Überlastsicherung miteinander verbunden sind, wobei die Überlastsicherung derart ausgebildet ist, dass die Verbindung zwischen Riemenscheibe (1) und Nabe (7) bei Überschreiten eines vorgegebenen Drehmomentes unterbrochen wird, wobei
die Einrichtung zur Überlastsicherung durch zwei Bauteile, nämlich einer Nabe 7 und
einem Limiter-Ring (6) gebildet wird, wobei der Limiter-Ring (6) aus Metall ist und über zum Mittelpunkt hin radial gerichtete Zapfen (6a) verfügt und durch radialen Formschluss mit der Nabe (7) das Drehmoment auf die Kompressorwelle überträgt und dass sich der Limiter-Ring (6) axial auf der Nabe (7) verschieben laßt d.g. dass der maximale Außendurchmesser der Nabe (7) größer als der Bruchkreis des Limiter-Rings (6) rod und

2. Kompressor nach Anspruch 1, **dadurch gekennzeichnet, dass** der Limiter-Ring (6) außenseitig mit einen kunststoff ummanzelt ist.

3. Vorrichtung nach Anspruch 1, **dadurch gekennzeichnet, dass** der Kunststoff Phenol-Formaldehydharz ist.

4. Kompressor nach zumindest einem der vorhergehenden Ansprüche, **dadurch gekennzeichnet, dass** der Limiter-Ring (6) außenrandseitig eine Profilierung aufweist. die Zapfen (6a) an ihrem Übergang zum Limiter-Ring (6) eine axiale Verlaufende Verjungung aufweisen.

5. Kompressor nach zumindest einem der vorhergehenden Ansprüche, **dadurch gekennzeichnet, dass** die Nabe (7) zur Aufnahme der Zapfen (6a, 10a), axial verlaufende Nuten aufweist.

6. Kompressor nach zumindest einem der vorhergehenden Ansprüche, **dadurch gekennzeichnet, dass** die Nabe (7) stirnseitig eine Vertiefung aufweist die das Versenken von Befestigungselementen ermöglicht.

7. Kompressor nach zumindest einem der vorhergehenden Ansprüche, **dadurch gekennzeichnet, dass** zwischen Nabe (7) und Limiter-Ring (6) bzw. Mitnehmerscheibe (10) ein Federelement (11) angeordnet ist.

8. Kompressor nach zumindest einem der vorhergehenden Ansprüche, **dadurch gekennzeichnet, dass** die Nabe (7) aus Kunststoff besteht.

9. Kompressor nach zumindest einem der vorhergehenden Ansprüche, **dadurch gekennzeichnet, dass** die Nabe (7) aus Aluminium besteht.

10. Kompressor nach zumindest einem der vorhergehenden Ansprüche, **dadurch gekennzeichnet, dass** die Nabe (7) aus Sintermetall besteht.

11. Kompressor nach zumindest einem der vorhergehenden Ansprüche, **dadurch gekennzeichnet, dass** die Nabe (7) aus Messing besteht.

## Claims

1. Compressor with a device for transmitting a torque, with a hub (7) for connection to the compressor shaft and with a pulley (1) mounted on the compressor casing (4), the pulley (1) and the hub (7) being connected to one another via an arrangement for vibration damping (9) and for overload protection, the overload protection being designed in such a way that the connection between the pulley (1) and hub (7) is broken when a stipulated torque is overshot, the overload protection arrangement being formed by two components, to be precise a hub and a limiter ring (6), the limiter ring (6) being made from metal and having tenons (6a) directed radially with respect to the centre point and transmitting the torque to the compressor shaft by a radial form fit with the hub (7), and that the driver (5) is formed by a plastic sheathing the limiter ring and the driver (5) and limiter ring (6) are displaceable axially on the hub (7), **characterized in that** the maximum outside diameter of the hub (7) is larger than the break circle of the limiter ring (6), and **in that** the tenons (6a) of the limiter ring have an axially running taper at their transition to the limiter ring (6).

2. Compressor according to Claim 1, **characterized in that** the limiter ring (6) is sheathed on the outside with a plastic.

3. Compressor according to Claim 1, **characterized in that** the plastic is phenol formaldehyde resin.

4. Compressor according to at least one of the preceding claims, **characterized in that** the limiter ring (6) has at the outer margin a profiling.

5. Compressor according to at least one of the preceding claims, **characterized in that** the hub (7) has axially running grooves for receiving the tenons (6a, 10a).

6. Compressor according to at least one of the preceding claims, **characterized in that** the hub (7) has on the end face a depression which enables fastening elements to be countersunk.

7. Compressor according to at least one of the preceding claims, **characterized in that** a spring element (11) is disposed between the hub (7) and limiter ring (6) or driver disc (10).

8. Compressor according to at least one of the preceding claims, **characterized in that** the hub (7) consists of plastic.

9. Compressor according to at least one of the preceding claims, **characterized in that** the hub (7) consists of aluminium.

10. Compressor according to at least one of the preceding claims, **characterized in that** the hub (7) consists of sintered metal.

11. Compressor according to at least one of the preceding claims, **characterized in that** the hub (7) consists of brass.

## Revendications

1. Compresseur avec un dispositif de transmission d'un couple avec un moyeu (7) pour la connexion à l'arbre du compresseur et une poulie à courroie (1) montée à rotation sur le boîtier de compresseur (4), la poulie à courroie (1) et le moyeu (7) étant connectés l'un à l'autre par le biais d'un dispositif pour l'amortissement des vibrations (9) et pour la protection contre les surcharges, la protection contre les surcharges étant réalisée de telle sorte que la connexion entre la poulie à courroie (1) et le moyeu (7), en cas de dépassement d'un couple prédéfini, soit interrompue, le dispositif pour la protection des surcharges étant formé par deux composants, à savoir un moyeu et une bague de limitation (6), la bague de limitation (6) étant en métal et disposant de tourillons (6a) orientés radialement par rapport au centre, et transmettant, par engagement positif radial avec le moyeu (7), le couple à l'arbre de compresseur et le dispositif d'entraînement (5) étant formé par un plastique enrobant la bague de limitation et le dispositif d'entraînement (5) et la bague de limitation (6) pouvant être déplacés axialement sur le moyeu (7), **caractérisé en ce que**
le diamètre extérieur maximal du moyeu (7) est supérieur au cercle divisé de la bague de limitation (6) et **en ce que** les tourillons (6a) de la bague de limitation (6) présentent, au niveau de leur transition à la bague de limitation (6), un rétrécissement s'étendant axialement.

2. Compresseur selon la revendication 1, **caractérisé en ce que** la bague de limitation (6) est enrobée du côté extérieur par un plastique.

3. Compresseur selon la revendication 1, **caractérisé en ce que** le plastique est de la résine phénolformaldéhyde.

4. Compresseur selon au moins l'une quelconque des revendications précédentes, **caractérisé en ce que** la bague de limitation (6) présente, du côté du bord extérieur, un profilage.

5. Compresseur selon au moins l'une quelconque des revendications précédentes, **caractérisé en ce que** le moyeu (7) pour recevoir les tourillons (6a, 10a) présente des rainures s'étendant axialement.

6. Compresseur selon au moins l'une quelconque des revendications précédentes, **caractérisé en ce que** le moyeu (7) présente du côté frontal un renfoncement qui permet l'enfoncement d'éléments de fixation.

7. Compresseur selon au moins l'une quelconque des revendications précédentes, **caractérisé en ce qu'**entre le moyeu (7) et la bague de limitation (6) ou le disque d'entraînement (10) est disposé un élément de ressort (11).

8. Compresseur selon au moins l'une quelconque des revendications précédentes, **caractérisé en ce que** le moyeu (7) se compose de plastique.

9. Compresseur selon au moins l'une quelconque des revendications précédentes, **caractérisé en ce que** le moyeu (7) se compose d'aluminium.

10. Compresseur selon au moins l'une quelconque des revendications précédentes, **caractérisé en ce que**
le moyeu (7) se compose de métal fritté.

11. Compresseur selon au moins l'une quelconque des revendications précédentes, **caractérisé en ce que** le moyeu (7) se compose de laiton.
